Europäisches Patentamt

European Patent Office

Office européen des brevets

(11) Veröffentlichungsnummer: **0 388 617**

**A1**

(12) **EUROPÄISCHE PATENTANMELDUNG**

(21) Anmeldenummer: **90102346.5**

(22) Anmeldetag: **07.02.90**

(51) Int. Cl.⁵: **A01K 97/22, B62B 1/00**

(30) Priorität: **20.03.89 DE 3909130**

(43) Veröffentlichungstag der Anmeldung:
**26.09.90 Patentblatt 90/39**

(84) Benannte Vertragsstaaten:
**CH DE ES FR GB IT LI NL**

(71) Anmelder: **Teichmann, Armin**
**Industriestrasse 35**
**D-5600 Wuppertal 11(DE)**

(72) Erfinder: **Teichmann, Armin**
**Industriestrasse 35**
**D-5600 Wuppertal 11(DE)**

(74) Vertreter: **Sonnet, Bernd et al**
**Stresemannstrasse 6-8 Postfach 20 13 27**
**D-5600 Wuppertal 2(DE)**

(54) **Gerätewagen, insbesondere für Angler.**

(57) Dargestellt und beschrieben ist ein Gerätewagen (10), insbesondere für Angler, der im wesentlichen aus einem, Stauraum (27) und Sitzfläche (28) bildenden Kasten (11) mit Rädern (12) und wenigstens zwei höhenverstellbaren Füßen (13) besteht. Um dem Benutzer bei der Ausübung seiner Tätigkeit bestmöglichen Komfort zu bieten und einen Gerätewagen zu schaffen, der sich geländegängig leicht verfahren läßt, sieht die Erfindung vor, daß der Kasten (11) auf einem Rohrrahmen (14) mit horizontalen Streben (15, 16) und vertikalen Pfosten (17, 18) aufbaut, wobei die unten und oben offenen Pfosten (17, 18) Aufnahmeräume (30) für Funktionsteile wie Rutenhalter (33), Füße (13) und/oder Achsschenkel (22) der Räder (12) ausbilden.

FIG.1

## Gerätewagen, insbesondere für Angler

Die Erfindung bezieht sich auf einen Gerätewagen, insbesondere für Angler, im wesentlichen bestehend aus einem, Stauraum und Sitzfläche bildenden, mit Rädern und wenigstens zwei höhenverstellbaren Füßen versehenen Kasten.

Derartige Wagen dienen als Transportgeräte für das umfangreiche Angelzubehör und auch als Sitzplatz für den Angler. Sie sind in zahlreichen Ausführungen bekannt.

So zeigt beispielsweise das DE-GM 86 02 902 eine Transportkarre, die mit einer Deichsel und Aufnahmen zum Aufsetzen eines Anglersitzkastens versehen ist. Die der rollenden Fortbewegung des Wagens dienenden Räder können am Angelplatz derart abgeklappt werden, daß das Gerät, nunmehr auf vier Füßen stehend, festen Halt bekommt. Die Räder behindern aber die freie Beinbewegbarkeit des Anglers. Auch bietet der Kasten wenig Stauraum.

Eine vergleichbare Karre mit aufsetzbarem Anglersitzkasten ist auch aus dem DE-GM 78 03 921 bekannt. Zum Transport des Kastens über unwegsames Gelände kann ein Tragriemen mittels Karabinerhaken an den Kasten angeschlossen werden. Ein solcher Transport ist jedoch bei schwerem Angelgerät sehr lästig und mühsam, oder aber der Kasten muß bezüglich seines Stauraums so minimal bemessen werden, daß er sich noch leicht tragen läßt, dann aber an Nutzeffekt zu wünschen übrig läßt.

Aus der DE-OS 36 01 224 ist ein weiterer Gerätewagen bekannt. Er besteht im Prinzip aus einer Kiste mit vier Füßen und zwei abklappbar am Kasten angebrachten Rädern sowie aus einem an der Rückwand des Kastens ansteckbaren Transportbügel und Rutenhalter.

Das DE-GM 84 18 565, von dem die Erfindung ausgeht, zeigt bereits einen Gerätewagen, insbesondere für Angler, der einerseits mittels zweier Räder verfahrbar ist, andererseits aber auch auf unebenem Boden in gewissen Grenzen ausgerichtet sicheren Stand erhalten kann, wozu zwei ausziehbare und höhenverstellbare Füße an einem von zwei klappbaren Kästen angebracht sind. Das aus Metallprofilen bestehende und die beiden Räder tragende Grundprofil bildet zugleich einen bügelförmigen Griffkörper aus, der bei Benutzung des Gerätes als Sitzgelegenheit auch als Rückenlehne für den Angler dienen kann. Diese Konstruktion hat aber zur Folge, daß sich die von der dem Transportbügel gegenüberliegenden Seite zugänglichen Schubfächer zwischen den Beinen des Anglers befinden, so daß er, um Zugriff zum Inhalt der Schubfächer zu erhalten, jedesmal aufstehen muß. Auch muß er sich verrenken, wenn er dem auf der dem Kasten abgewandten Rückseite des Bügels angeordneten Rutenhalter eine Rute entnehmen will.

Der Erfindung liegt folglich die Aufgabe zugrunde, einen Gerätewagen der im Oberbegriff des Anspruches 1 näher umrissenen und insbesondere aus dem DE-GM 84 18 565 bekannten Art verfügbar zu machen, dessen geschickter Aufbau dem Angel sportler bei der Ausübung seiner Tätigkeit bestmöglichen Komfort bietet und der sich dennoch geländegängig leicht verfahren läßt.

Die Erfindung löst diese Aufgabe im wesentlichen und in erster Linie dadurch, daß der Kasten auf einem Rohrrahmen mit horizontalen Streben und vertikalen Pfosten aufbaut, wobei die unten und oben offenen Pfosten Aufnahmeräume für Funktionsteile wie Rutenhalter, Füße und/oder Achsschenkel der Räder ausbilden.

Während bei dem in Bezug genommenen Stand der Technik entsprechend dem DE-GM 84 18 565 zur höhenverstellbaren Aufnahme der Füße an einander gegenüberliegenden Kastenaußenseiten besondere Rohre befestigt sind, dienen entsprechend der Erfindung die rahmenbildenden Rohre zugleich zur höhenverstellbaren Aufnahme der Füße. Sie können, da sie nicht nur an der Unterseite, sondern auch oben offen sind, auch als Aufnahmeräume zum An-oder Einstecken zusätzlicher Funktionsteile benutzt werden, die der Angler benötigt. So kann man insbesondere in die nach obenen offenen Pfosten Käscher, einen Rutenhalter, Behälter für Köder oder auch einen Regenschirm einstecken. Da die Pfosten den Kasten als Rohrrahmen gestalten, befinden sie sich an den Außenseiten und behindern dadurch den auf der Sitzfläche sitzenden Angler nicht. Außerdem ist der Vorteil gegeben, daß die vertikalen Pfosten quasi in die Umrißkontur des Kastens integriert sind, nach außen also nicht vorstehen und dort keine Ursachen für Verletzungsgefahren bilden können wie etwa die außen angebrachten Rohre bei dem im DE-GM 84 18 565 beschriebenen Gerät.

Eine vorteilhafte Ausgestaltung des Gerätewagens besteht darin, daß der Kasten sechs Pfosten umfaßt, von denen die eckäußeren je einen Fuß teleskopartig höhenverstellbar und jeder an den Kastenlängsseiten dazwischen angeordnete weitere Pfosten einen Rad-Achsschenkel aufnehmen. Die Räder können mit ihren Achsschenkeln lose in diese Pfosten eingesteckt sein, so daß sie beim Anheben des Gerätewagens herausfallen und dann der Kasten als Sitzkasten benutzbar ist, dessen sämtliche vier Füße unabhängig voneinander in der Höhe verstellbar sind. Damit ist es möglich, die Sitzfläche auch bei ungünstig geneigtem Gelände zumeist horizontal auszurichten. Hieraus resultiert nicht nur ein sehr bequemer Sitz des Anglers, sondern auch der Umstand, daß alle im Stauraum des Gerätewagens aufgenommenen Gegenstände nicht verrutschen können.

Zweckmäßig ist der Kasten in einen durch die Sitzfläche abgedeckten und einen offenen Stauraum unterteilt. Der offene Stauraum, in dem beispielsweise der Fang aufbewahrt werden kann, ist somit von dem auf der Sitzfläche sitzenden Angler leicht zu erreichen, ohne daß er sich vom Sitz erheben muß. Der offene Stauraum reicht zweckmäßig bis unter die Sitzfläche, so daß dort, etwa bei Regen, gewisse Gegenstände auch geschützt untergebracht werden können.

Im übrigen ist es vorteilhaft, wenn der Stauraum unter der Sitzfläche mindestens teilweise zur Aufnahme von Schubfächern ausgebildet ist, die von der Stirnseite des Wagens her handhabbar sowie in Längs- bzw. Fahrtrichtung des Wagens schiebbar angeordnet sind. Der normalerweise quer dazu sitzende Angler kann also seitlich neben seinem Körper ein Schubfach öffnen und bequem den gewünschten Inhalt, beispielsweise einen Köder, herausnehmen.

Zugunsten eines besonders sicheren Transports sind die Schubfächer in der eingeschobenen Stellung verriegelbar. Dies kann mit Einzelverschlüssen oder auch mit einem Zentralschloß geschehen.

Ein weiterer Vorteil des Erfindungsgegenstandes besteht gemäß weiterer Ausgestaltung darin, daß die Füße aus ihrerseits selbst Einsteckaufnahmen ausbildenden Rohren bestehen. Selbst wenn die Füße im wesentlichen so lang sind wie die sie aufnehmenden Pfosten des Rohrrahmens, können also trotzdem weitere Funktionsgegenstände dort eingesteckt werden, da sie in den Hohlräumen der Füße Platz finden.

Bezüglich weiterer vorteilhafter und zweckmäßiger Ausgestaltungen wird auf die übrigen Unteransprüche sowie auf die nachfolgende Beschreibung eines in den Zeichnungen dargestellten Ausführungsbeispiels verwiesen. In den Zeichnungen zeigen:

Fig. 1 eine schaubildliche Darstellung und
Fig. 2 eine Seitenansicht des Gerätewagens.

Der insgesamt mit 10 bezeichnete Gerätewagen besteht aus einem Kasten 11 mit Rädern 12 und vier Füßen 13.

Der Kasten 11 baut auf einem Rohrrahmen 14 auf. Dieser besteht aus horizontalen Streben 15 und 16 sowie aus vertikalen Pfosten 17 und 18. Zumindest die vertikalen Pfosten, vorzugsweise aber auch die horizontalen Streben, bestehen aus Rohren, bevorzugt aus Leichtmetallrohren quadratischen oder rechteckigen Querschnitts. Die Streben und Pfosten sind zur Bildung des in sich stabilen Rohrrahmens 14 miteinander verschweißt oder auch fest verschraubt. Wandelemente 19, etwa Kunststoffplatten, sind zur Bildung geschlossener Kastenwände mit dem Rohrrahmen 14 fest verbunden.

Die vier eckäußersten Pfosten 17 sind zur höhenverstellbaren Aufnahme der Füße 13 vorgesehen, die ihrerseits aus Rohren mit unterseitig daran vorzugsweise gelenkig angebrachten Aufstellplatten 20 bestehen.

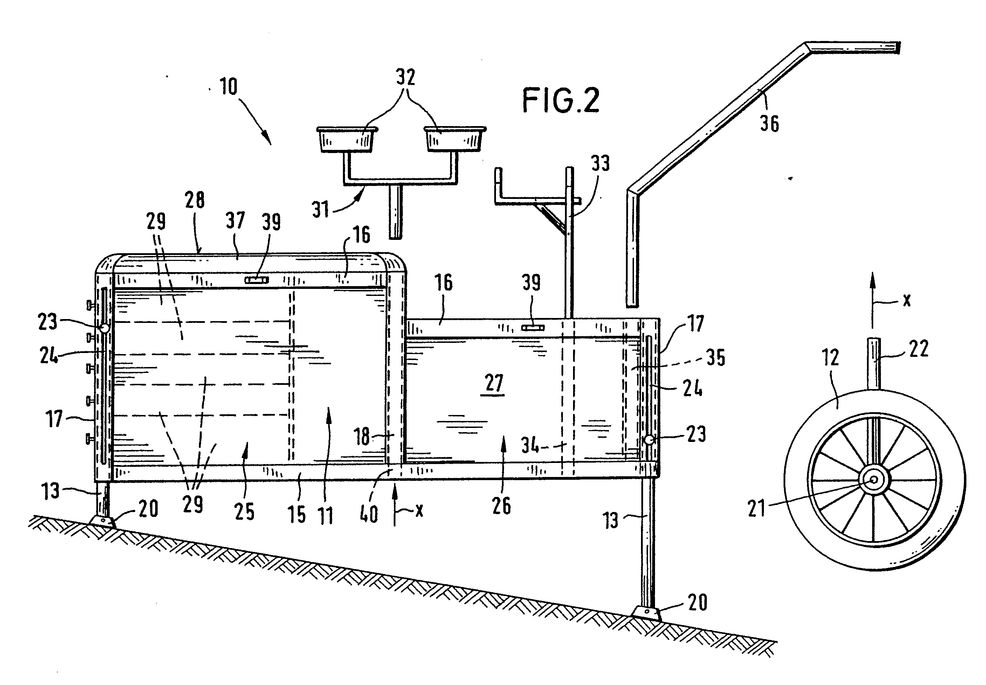

Die an den Längsseiten des Kastens 11 zwischen den eckäußersten vertikalen Pfosten 17 angeordneten weiteren vertikalen Pfosten 18 sind ebenfalls Rohre und dienen zur Halterung je eines Rades 12. Diese Halterung besteht einfach darin, daß jedes Rad 12 mit seiner Achse 21 an einem Achsschenkel 22 gehaltert ist, der von unten in den vertikalen Pfosten 17 lose eingesteckt wird (vgl. Pfeile "x" in Fig. 2).

Wenn, wie beim Ausführungsbeispiel, die untere Längsstrebe 15 des Kastens 11 durchgehend verläuft, weist sie in dem dem vertikalen Pfosten 18 zugeordneten Bereich vertikal eine Querbohrung 40 auf. Man kann aber auch die vertikalen Pfosten 18 nach unten durchgehen und Teil-Streben 15 an die Pfosten 18 anstoßen lassen und damit verschweißen.

Zur Arretierung der Auszugslage der vertikal verstellbaren Füße 13 sind an diesen Klemmschrauben 23 befestigt, deren Schäfte in Längsschlitzen 24 der Pfosten 17 gleiten können. Wie günstig sich der Gerätewagen 10 horizontal ausrichten läßt, veranschaulicht Fig. 2.

Im übrigen ist der Kasten 11 in zwei "Teilkästen" unterteilt, und zwar in einen höheren Sitzkasten 25 und einen niederen offenen Kasten 26. Der Stauraum 27 reicht, wie aus Fig. 2 ersichtlich, ein Stück unter die Sitzfläche 28 des Sitzkastens 25. Der restliche Freiraum unter der Sitzfläche 28 wird für Schubfächer 29 genutzt. Bei hinreichend großer Sitzfläche 28 sind diese Schubläden 29 daher nicht zu tief und bleiben somit übersichtlich. Sie sind, wie außerdem aus den Figuren ersichtlich, von der Stirnseite des Gerätewagens 10 her zu schieben. Der quer auf dem Gerätewagen 10 sitzende Angler kann daher, ohne aufstehen zu müssen und ohne sich zu verrenken sowohl auf der einen Seite leicht Zugang zu den Schubfächern 29 finden wie auch auf der anderen Seite zum offenen Kastenteil 26.

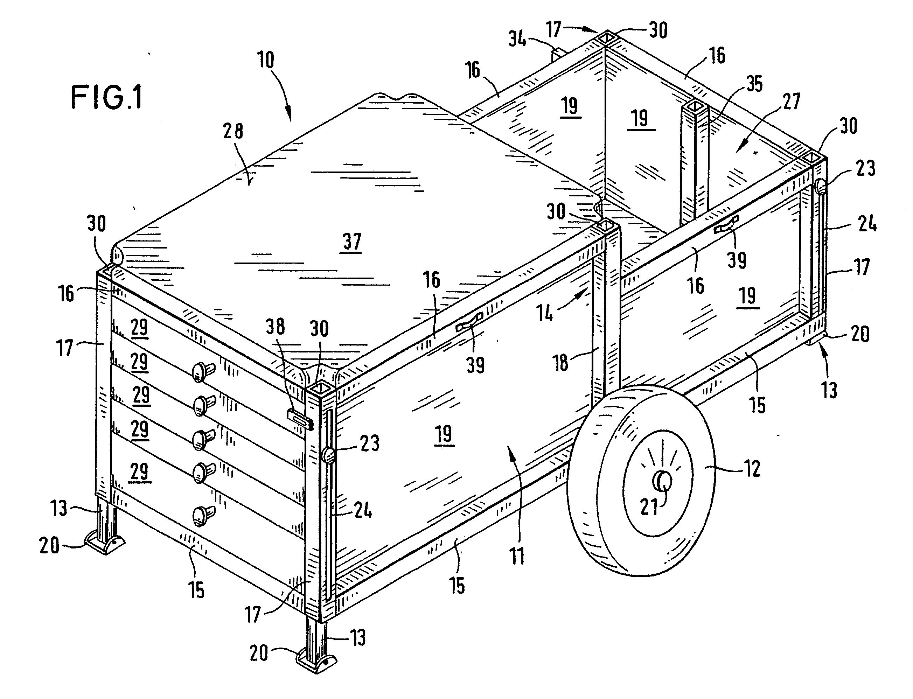

Wie in Fig. 1 veranschaulicht, weisen alle vertikalen Pfosten 17 und 18 oben Öffnungen 30 auf, die ggf. mit Verschlußstopfen abdeckbar sein können. Dadurch wird eine Vielzahl von Aufnahmemöglichkeiten für Zusatzbauteile geschaffen, so z.B. für einen Regenschirm oder auch einen Halter 31 für Köderbehälter 32 oder für einen Angelrutenhalter 33. Letzterer ist in Fig. 2 allerdings in einer zusätzlichen Steckaufnahme 34 eingesteckt dargestellt, die sich an der Außenwand des offenen Kastenteils befindet (Fig. 1). An der benachbarten Stirnseite befindet sich innen ein weiteres Aufnahmerohr 35 zum lösbaren Einstecken einer Deichsel 36 bzw. eines Transportgriffs 36.

Zur Verfahrbarkeit des Wagens kann man sich allerdings auch einen Transportbügel vorstellen, der mit seinen beiden Bügelschenkeln in die oberseitig offenen vertikalen Pfosten 17 eingesteckt und dort lösbar verriegelt wird.

Die Sitzfläche 28 ist Bestandteil eines am Kasten angebrachten Sitzkissens oder -polsters 37, welches in seinen Ecken den freien Zugang zu den Einsteköffnungen 30 der vier vertikalen Pfosten 17 und 18 freiläßt.

Zur Verriegelung der Schubladen 29 kann pro Schublade z.B. ein Riegel 38 vorgesehen sein oder auch eine gemeinschaftliche Verriegelung für alle Schubfächer 29, beispielsweise in Form einer an einem Vertikalpfosten 17 schwenkbar angebrachten Klappe, die sich in der Verschlußstellung über Randbereiche der Stirnfronten aller Schubfächer 29 gemeinsam erstreckt.

Schließlich sind mit 39 noch Einhängeösen bezeichnet, in die Haken von Spannbändern eingeklinkt werden können, mit deren Hilfe während des Transports auf dem Gerät eine Reihe von Utensilien, so insbesondere die Angelruten, sicher befestigt werden können.

Fig. 1 zeigt, abgesehen vom dort fehlenden Transportgriff bzw. Deichsel, den Gerätewagen im verfahrbaren Zustand. Dabei ist es durchaus erwünscht, daß die in Fahrtrichtung vorn angeordneten Füße 13 ein Stück nach unten ausgestellt sind. Der Gerätewagen läßt sich folglich ohne erhebliche Schräglage jederzeit abstellen.

Am Angelort angekommen, wird der Wagen kurz angekippt, so daß die Räder abfallen, weil ihre Achsschenkel 22 aus den vertikalen Pfosten 18 herausgleiten. Dann richtet man die Höheneinstellung der vier Füße 13, dem Gelände angepaßt, aus, so daß der Kasten 11 im wesentlichen horizontal festen Stand findet. Nun kann der Angler die von ihm benötigten Geräte und Hilfsmittel in die dazu bereitstehenden oberen Öffnungen der Pfosten 17, 18 oder der Rohre 34 und 35 einsetzen, den Köder auswerfen und, auf dem Polster 37 sitzend, von wo aus er leichten Zugang zu den Schubfächern 29 und zum offenen Kastenraum 19 findet, in aller Bequemlichkeit und Muße seiner Leidenschaft nachgehen.

## Ansprüche

1. Gerätewagen, insbesondere für Angler, im wesentlichen bestehend aus einem, Stauraum und Sitzfläche bildenden, mit Rädern und wenigstens zwei höhenverstellbaren Füßen versehenen Kasten, dadurch gekennzeichnet, daß der Kasten (11) auf einem Rohrrahmen (14) mit horizontalen Streben (15, 16) und vertikalen Pfosten (17, 18) aufbaut, wobei die unten und oben offenen Pfosten (17, 18) Aufnahmeräume (30) für Funktionsteile wie Rutenhalter (33), Füße (13) und/oder die Achsschenkel (22) der Räder (12) ausbilden.

2. Gerätewagen nach Anspruch 1, dadurch gekennzeichnet, daß der Kasten (11) sechs Pfosten (17, 18) umfaßt, von denen die eckäußeren Pfosten (17) je einen Fuß (13) teleskopartig höhenverstellbar und jeder an den Kastenlängsseiten dazwischen angeordnete weitere Pfosten (18) einen Rad-Achsschenkel (22) aufnehmen.

3. Gerätewagen nach Anspruch 2, dadurch gekennzeichnet, daß die unteren Streben (15) im Anordnungsbereich der mittleren Pfosten eine lotrechte Querbohrung (40) aufweisen.

4. Gerätewagen nach Anspruch 1 oder einem der folgenden, dadurch gekennzeichnet, daß der Kasten (11) in einen durch die Sitzfläche (28) abgedeckten und einen offenen Stauraum (25; 26) unterteilt ist.

5. Gerätewagen nach Anspruch 4, dadurch gekennzeichnet, daß die Wandhöhe des Kastens (11) im Sitzbereich größer ist als im Bereich des offenen Stauraums.

6. Gerätewagen nach Anspruch 4 oder 5, dadurch gekennzeichnet, daß der offene Stauraum (26) bis unter die Sitzfläche (28) reicht.

7. Gerätewagen nach Anspruch 1 oder einem der folgenden, dadurch gekennzeichnet, daß der Stauraum (25) unter der Sitzfläche (28) mindestens teilweise zur Aufnahme von Schubfächern (29) ausgebildet ist.

8. Gerätewagen nach Anspruch 7, dadurch gekennzeichnet, daß die von der Stirnseite des Wagens (10) her handhabbaren Schubfächer (29) in Längs-bzw. Fahrtrichtung des Wagens (10) schiebbar angeordnet sind.

9. Gerätewagen nach Anspruch 6 oder 7, dadurch gekennzeichnet, daß die Schubfächer (29) in der eingeschobenen Stellung verriegelbar sind.

10. Gerätewagen nach Anspruch 1 oder einem der folgenden, dadurch gekennzeichnet, daß die Sitzfläche (28) Bestandteil eines fest mit dem Rahmen verbundenen Sitzkissens (37) ist.

11. Gerätewagen nach Anspruch 1 oder einem der folgenden, dadurch gekennzeichnet, daß der Kasten (11) mit weiteren, zusätzliche Einsteckaufnahmen bildenden Rohren (34, 35) versehen ist.

12. Gerätewagen nach Anspruch 1 oder einem der folgenden, dadurch gekennzeichnet, daß die Füße (13) aus ihrerseits selbst Einsteckaufnahmen ausbildenden Rohren bestehen.

13. Gerätewagen nach Anspruch 1 oder einem der folgenden, dadurch gekennzeichnet, daß die Rohre (13; 15, 16; 17, 18; 34, 35) reckeckigen oder quadratischen Querschnitt aufweisen.

FIG.1

EP 0 388 617 A1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8604794 (CZERWINSKI)<br>* das ganze Dokument *<br>--- | 1 | A01K97/22<br>B62B1/00 |
| A | FR-A-2588817 (SEBASTIEN)<br>----- | | |
| | | | **RECHERCHIERTE SACHGEBIETE (Int. Cl.5)**<br><br>A01K<br>B62B |

Der vorliegende Recherchenbericht wurde für alle Patentansprüche erstellt

| Recherchenort | Abschlußdatum der Recherche | Prüfer |
|---|---|---|
| DEN HAAG | 14 JUNI 1990 | VERDOODT S.J.M. |